# EUROPEAN PATENT APPLICATION

(11) **EP 1 333 385 A1**
(43) Date of publication of application: **06.08.2003**
(21) Application number: 01978869.4
(22) Date of filing: 24.10.2001
(51) Int. Cl.: G06F 17/30, G06F 13/00, G06F 12/00

(54) **INFORMATION REGISTRATION ASSISTING SYSTEM**

(30) Priority: 31.10.2000 JP 2000333422
(71) Applicant: Cybozu, Inc., Tokyo 112-0004 (JP)
(72) Inventor: AKAMATSU, Yosuke Cybozu, Inc., Bunkyo-ku Tokyo 112-0004 (JP); TAKASUKA, Toru Cybozu, Inc., Bunkyo-ku Tokyo 112-0004 (JP)
(74) Representative: Pluckrose, Anthony William
(86) International application number: JP0109318
(87) International publication number: WO02037329

(57) **Abstract**

Business card information is transmitted to a business information server 28 by pressing a button included in a page of a business card exchange server 22 at a user terminal 18. A cookie (including a cookie ID (user identifying information) as its content) indicating that the user has been authenticated is simultaneously transmitted to the business information server 28. An information registration assisting database 30 stores a cookie ID and an intranet site URL (access information) in association with each other, so that the intranet site URL corresponding to the received cookie ID can be read out. Based on the read out intranet site URL and the business card information already received, link information is generated for requesting registration of the business card information with an address book function of a groupware. The link information is then transmitted to the user terminal 18.

## Description

### TECHNICAL FIELD

The present invention relates to an information registration assisting system, a device and method for assisting information registration, a device and method for distributing information, and an information storage medium. The present invention more particularly relates to, for example, a technique for allowing a user device capable of accessing both the Internet and an intranet to simply register distributed information received from an information distributing device on the Internet in an information registration device on the intranet by using an information registration assisting device on the Internet.

### BACKGROUND ART

Due to recent developments in World Wide Web (WWW) technology, users can access not only intranet sites but also Internet sites with a single Web browser while ensuring security by using a proxy server and the like. Intranet sites include so-called groupware which allows each user to register desired information at any time in a variety of formats, such as schedulers, bulletin boards, and address books.

While many Internet sites offer useful information users may wish to register on an intranet site, a firewall server (proxy server) is provided between the intranet and the Internet, making it difficult or impossible to directly access an intranet site from an Internet site, and therefore information registration on the intranet site must be made directly from a Web browser by each user.

More specifically, when a user makes a search and finds useful information on an Internet site and wishes to register the information on an intranet site, he/she must go through troublesome procedures of first storing (copying) the information, displaying on the Web browser a page for registering information on the intranet site, and pasting the stored information to a registration content input form provided on the page. Thus, although users can indiscriminately access intranet sites and Internet sites with a single Web browser, it is still bothersome to register information distributed from an Internet site to an intranet site.

In addition to such registration of information distributed from an Internet site to an intranet site, distributed information cannot always be registered easily from an Internet site to another Internet site, or from an intranet site to an Internet site or another intranet site, often requiring similar bothersome procedures.

### DISCLOSURE OF THE INVENTION

The present invention has been conceived in view of the above-described problems, and an object thereof is to provide an information registration assisting system, a device and method for assisting information registration, a device and method for distributing information, and an information storage medium, allowing simple registration of information from a user device to an information registration device.

In order to solve the above-described problems, the information registration assisting system according to one aspect of the present invention includes an information distributing device and an information registration assisting device, and the information registration assisting device supports a user device to register distributed information from the information distributing device in an information registration device. The information distributing device includes distributed information transfer link information transmitting means for transmitting to the user device distributed information transfer link information used for transmitting the distributed information from the user device to the information registration device. The information registration assisting device includes user identifying information receiving means for receiving user identifying information from the user device, information storage means for storing access information for registering information in the information registration device and the user identifying information in association with each other, access information reading means for reading the access information stored in the information storage means in association with the user information received by the user identifying information receiving means, registration content acquiring means for receiving the distributed information and using the information as a content to register in the information registration device, registration request link information generating means for generating registration request link information used by the user device for requesting registration of the registration content in the information registration device based on the access information read by the access information reading means and the registration content acquired by the registration content acquiring means, and registration request link information transmitting means for transmitting registration request link information generated by the registration request link information generating means to the user device . The user device can request the information registration device to register the registration content based on the registration request link information.

According to the present invention, information is distributed from an information distributing device to a user device, and distributed information transfer link information for transmitting (transferring) distributed information from the user device to the information registration assisting device is transmitted from the information distributing device to the user device. Based on the distributed information transfer link information, the user device can transmit distributed information from the information distributing device to the information registration assisting device. The information registration assisting device receives user identifying information from the user device. The information registration assisting device also receives from the user device information distributed from information distributing device, and uses the information as the content to be registered in the information registration device. Further, the information registration assisting device stores user identifying information and access information in association with each other. The access information is the information used by a user identified by the user identifying information associated with the access information to register information in the information registration device from the user device. When the user identifying information is received from the user device, the information registration assisting device reads out the access information corresponding to the user identifying information, and generates registration request link information based on the read out access information and the registration content already acquired (information distributed from the information distributing device). The registration request link information is used by the user device to request the information registration device to register the registration content. The registration request link information is transmitted from the information registration assisting device to the user device. Thus, the user device can request the information registration device to register the registration content based on the received registration request link information. As a result, information distributed from the information distributing device can be easily registered in the information registration device from the user device.

An information registration assisting device according to another aspect of the present invention is an information registration assisting device for assisting a user device to register information in an information registration device. The information registration assisting device comprises user identifying information receiving means for receiving user identifying information from said user device, information storage means for storing access information for registering information in the information registration device and the user identifying information in association with each other, access information reading means for reading the access information stored in the information storage means in association with the user information received by the user identifying information receiving means, registration content acquiring means for acquiring a registration content, registration request link information generating means for generating registration request link information used by the user device for requesting registration of the registration content in the information registration device based on the access information read by the access information reading means and the registration content acquired by the registration content acquiring means, and registration request link information transmitting means for transmitting to the user device registration request link information generated by the registration request link information generating means. The user device can request the information registration device to register the registration content based on the registration request link information.

According to the present invention, any information, such as information distributed from an information distributing device, information prearranged in the information registration assisting device, or information dynamically generated by the information registration assisting device, can be acquired as a registration content and simply registered in the information registration device from the user device.

According to one embodiment of the information registration assisting device of the present invention, the access information includes information for identifying the address of the information registration device, so that the address of the information registration device can be reliably included in the registration request link information, thereby ensuring an access to be made to the information registration device from the user device when requesting information registration.

According to another embodiment of the information registration assisting device of the present invention, the registration content acquiring means acquires information received from the user device as said registration content, and the received information is based on the information distributed from a predetermined information distributing device to said user device. This makes it possible to facilitate registration of the information distributed from the information distributing device in the information registration device from the user device.

An information distributing device according to a further aspect of the present invention is an information distributing device for causing an information registration device to register distributed information by using an information registration assisting device for assisting a user device to register information in the information registration device, comprising distributed information transfer link information transmitting means for transmitting to the user device distributed information transfer link information used for transmitting the distributed information to the information registration device from the user device.

According to the present invention, the distributed information transfer link information is transferred from the information distributing device to the user device, so that the distributed information can be easily transferred to the information registration assisting device from the user device. As a result, the user device can be supported by the information registration assisting device to simply register information in the information registration device.

A method according to a further aspect of the present invention is a method for assisting a user device to register information in an information registration device, comprising: a user identifying information receiving step for receiving user identifying information from said user device; an access information reading step for reading access information for registering information in the information registration device stored in association with the user information received at the user identifying information receiving step from information storage means for storing said access information and the user identifying information in association with each other; a registration content acquiring step for acquiring a registration content; a registration request link information generating step for generating, based on the access information read at the access information reading step and the registration content acquired at the registration content acquiring step, registration request link information used by the user device to request the information registration device to register said registration content; and a registration request link information transmitting step for transmitting registration request link information generated at the registration request link information generating step to the user device.

According to the present invention, any information, such as information distributed from an information distributing device, information prearranged in the information registration assisting device, or information dynamically generated by the information registration assisting device, can be acquired as registration content and simply registered in the information registration device from the user device.

Another method according to a further aspect of the present invention is a method for causing an information registration device to register distributed information by using an information registration assisting device for assisting a user device to register information in the information registration device, comprising distributed information transfer link information transmitting step for transmitting to said user device distributed information transfer link information for transmitting the distributed information from the user device to the information registration device.

According to the present invention, the distributed information transfer link information is transmitted from the information distributing device to the user device, so that the distributed information can be easily transferred to the information registration assisting device from the user device. As a result, the user device can be supported by the information registration assisting device to simply register information in the information registration device.

Further, an information storage medium according to a further aspect of the present invention is an information storage medium storing a program for assisting a user device to register information in an information registration device. The program causes a computer to execute: a user identifying information receiving step for receiving user identifying information from the user device; an access information reading step for reading access information for registering information in the information registration device stored in association with the user information received at the user identifying information receiving step from information storage means for storing the access information and the user identifying information in association with each other; a registration content acquiring step for acquiring a registration content; registration request link information generating step for generating, based on the access information read at the access information reading step and the registration content acquired at the registration content acquiring step, registration request link information used by the user device to request the information registration device to register the registration content; and registration request link information transmitting step for transmitting to the user device registration request link information generated at the registration request link information generating step.

The information storage medium includes any medium the computer can read information therefrom, such as RAMs, ROMs, CD-ROMs, and DVD-ROMs. By causing a computer to execute a program in the information storage medium according to the present invention, any information, such as information distributed from an information distributing device, information prearranged in the information registration assisting device, or information dynamically generated by the information registration assisting device, can be acquired as a registration content and simply registered in the information registration device from the user device.

### BRIEF DESCRIPTION OF THE DRAWINGS

Fig. 1 illustrates the overall configuration of an information registration assisting system according to an embodiment of the present invention.
Fig. 2 illustrates an example of a top page of Web based groupware.
Fig. 3 illustrates an example of a schedule page of Web based groupware.
Fig. 4 illustrates an example of a To Do list page of Web based groupware.
Fig. 5 illustrates an example of a bulletin board page of Web based groupware.
Fig. 6 illustrates an example of an address book page of Web based groupware.
Fig. 7 illustrates an example of a business information page of Web based groupware.
Fig. 8 illustrates an example of a business card presentation page provided from a business card exchange site.
Fig. 9 illustrates an example of a business card registration page provided from a business card exchange site.
Fig. 10 illustrates an example of an address book registration confirmation page provided from a business information server to which the business card presentation page jumps.
Fig. 11 illustrates an example of link information (for transferring distributed information) included in the business card presentation page provided from the business card exchange site.
Fig. 12 illustrates an example of a table stored in an information registration assisting database.
Fig. 13 illustrates an example of link information (for requesting registration) included in the address book registration confirmation page provided from the business information server.
Fig. 14 illustrates an example of an event announcement page provided from an event announcement site.
Fig. 15 illustrates an example of a schedule registration confirmation page provided from the business information server to which the event announcement site jumps.
Fig. 16 illustrates an example of a bulletin board registration confirmation page provided from the business information server to which the event announcement site jumps.
Fig. 17 illustrates an example of a hotel reservation confirmation page provided from a hotel reservation site.
Fig. 18 illustrates an example of an authentication information table stored in the information registration assisting database.
Fig. 19 illustrates an example of a schedule registration confirmation page provided from the business information server to which the hotel reservation site jumps.
Fig. 20 illustrates an example of a business advertisement page provided from a business advertisement site.
Fig. 21 illustrates an example of a To Do list registration confirmation page provided from the business information server to which the business advertisement site jumps.
Fig. 22 illustrates a source for displaying the To Do list registration button on the business advertisement page.

### BEST MODE FOR CARRYING OUT THE INVENTION

Preferred embodiments of the present invention will now be described in detail with reference to the drawings.

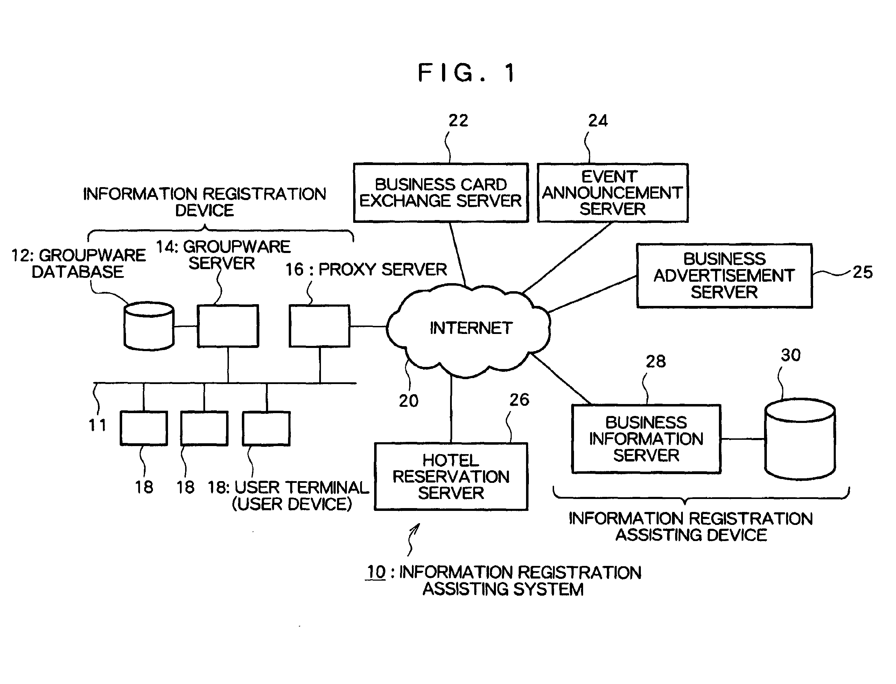

Fig. 1 illustrates an overall configuration of an information registration assisting system according to an embodiment of the present invention. An information registration assisting system 10 illustrated in Fig. 1 includes a local area network (LAN) 11, and Internet 20. A plurality of user terminals (user devices) 18, a groupware server (intranet server) 14 (information registration device), and a proxy server 16 are connected to the LAN 11. The user terminal 18 is a well-known personal computer system, capable of accessing an Internet site and an intranet site as desired with a Web browser installed therein.

The groupware server 14 is a well-known server computer system especially designed to provide a Web based groupware for users of the user terminals 18 (intranet users). This groupware provides the user terminal 18 with a variety of services, such as schedule management, bulletin boards, address books, and To Do lists, in the WWW format complying with Hypertext Transfer Protocol (http). At the user terminal 18, such services can be utilized by activating a Web browser and inputting the address of the groupware server 14. A groupware database 12 (information registration device) is connected to the groupware server 14 for registering (storing) various information, such as schedule management, bulletin board, address books, and To Do lists, as directed by the user terminal 18.

The proxy server 16 is a well-known server computer system for allowing free access from each user terminal 18 to various sites on the Internet 20 while prohibiting free access from the Internet 20 to computers on the LAN 11, and is provided with well-known packet filtering function, gateway function, and proxy function.

In the information registration assisting system 10 according to this embodiment, the LAN 11, the groupware server 14, the groupware database 12, the user terminal 18, and the proxy server 16 constitute the intranet.

A business card exchange server 22, an event announcement server 24, a business advertisement server 25, a hotel reservation server 26 (these servers act as information distributing devices), and a business information server 28 (information registration assisting device) are connected to the Internet 20 and are freely accessible from each user terminal 18.

Among these servers, the business card exchange server 22 is a Web site a user can access from any terminal capable of accessing the Internet 20 to post (register) personal information (such as name, company name, e-mail address, and phone number), allowing such registered personal information to be readily registered in the groupware (address book function) of the intranet. By thus posting personal information on the business card exchange server 22, the information including the name of the user can be publicized to intranet users, thereby serving as an effective business tool.

The event announcement server 24 is a Web site for distributing a page that announces various events. On this Web page, description of the event is shown and a button used for registering the description of the event with the schedule management function of the groupware is provided.

The business advertisement server 25 is a Web site used by a company to advertise its own product or service. The page distributed from the business advertisement server 25 particularly includes a button for registering information on the product or service in the groupware.

The hotel reservation server 26 is a Web site for making an online reservation of hotels and inns in general. The page distributed from the hotel reservation server 26 includes, among others, a button for registering in the groupware the hotel or inn and the date the user is planning to stay.

The business information server 28 is a Web site for assisting the user terminal 18 to register, in the groupware of the intranet, the information distributed from the business card exchange server 22, the event announcement server 24, the business advertisement server 25, and the hotel reservation server 26, and is connected to an information registration assisting database 30 for assisting such registration. The contents stored in the information registration assisting database 30 will be described hereinafter. The business information server 28 and the information registration assisting database 30 are designed to be shared by many intranets.

The contents of the groupware provided on the intranet will now be discussed. The groupware is implemented by a common gateway interface (CGI) program stored in the groupware server 14. This program is installed in the server 14 through an information storage medium such as a CD-ROM and a DVD-ROM, or through a communication network such as the Internet 20. A Web browser is installed in the user terminal 18 as described above, and therefore the page for receiving a variety of services of the groupware is displayed on the user terminal 18 by making an access to the groupware server 14 with the Web browser.

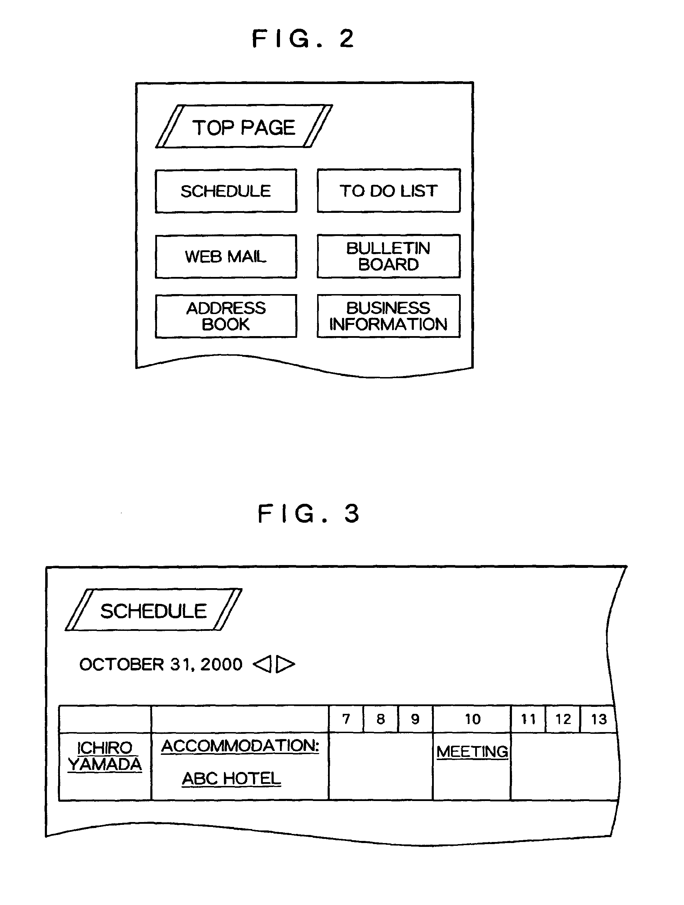

Fig. 2 shows an exemplary page first displayed after user authentication when a user accesses from the user terminal 18 to the groupware server 14, i.e. the top page. When a user accesses the groupware server 14 from the user terminal 18 for the first time, a page prompting the user to input a user ID and password is shown. After the user inputs the correct user ID and password, a cookie indicating that the user is authenticated is stored in the user terminal 18. Thereafter this cookie is automatically transmitted when an access is made from the user terminal 18 to the groupware server 14. The top page illustrated in Fig. 2 includes a plurality of buttons to jump to the respective services offered by the groupware. In this example, the groupware provides schedule management service, To Do list management service, Web mail service, a bulletin board service, address book management service, and business information provision service.

The schedule management service is used for management of each user's schedule, and a schedule management page as illustrated in Fig. 3, for example, is presented to each user. The user can write his/her schedule when clicking a predetermined part of the page with a mouse or the like. By way of example, this page shows the schedule for Mr. Ichiro Yamada on October 31, 2000, indicating that he is planning to stay at ABC hotel on that day. This accommodation schedule is arranged by the user terminal 18 through registration of information distributed from the hotel reservation server 26 supported by the business information server 28, as described hereinafter.

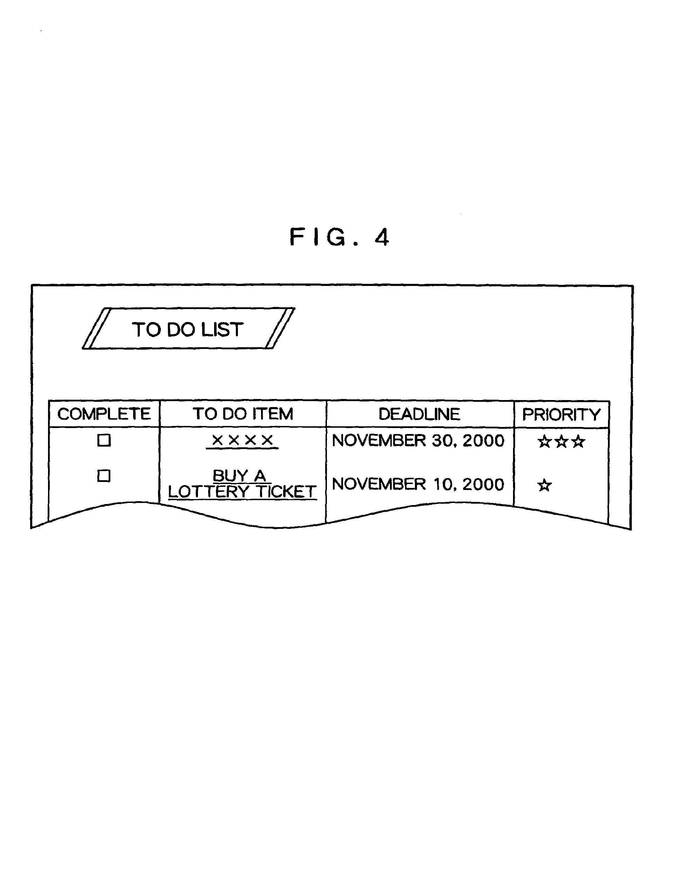

The To Do list management service is used for managing a list of jobs to be done by each user. A To Do list management page as illustrated in Fig. 4, for example, is presented to each user. After clicking an unillustrated addition button provided on this page, a new To Do item (job) can be added to the list, and information such as the name of the To Do item, deadline, priority, and note can be registered. Among these information items, the To Do item name, deadline, and priority are displayed in the form of a list. Further, after a checkbox provided on the left side of each To Do item is checked, the corresponding item is regarded as complete. When the To Do item name associated with each To Do item is clicked, the details of that item can be displayed. The To Do item "Buy a lottery ticket" on the list illustrated in Fig. 4 is registered by the user terminal 18 supported by the business information server 28 using information distributed from the business advertisement server 25, as described hereinafter.

The Web mail service is a service for allowing transmission and reception of e-mails on the Web browser, achieving transmission and reception of e-mails with a Web browser without requiring any special e-mail software to be installed in the user terminal 18.

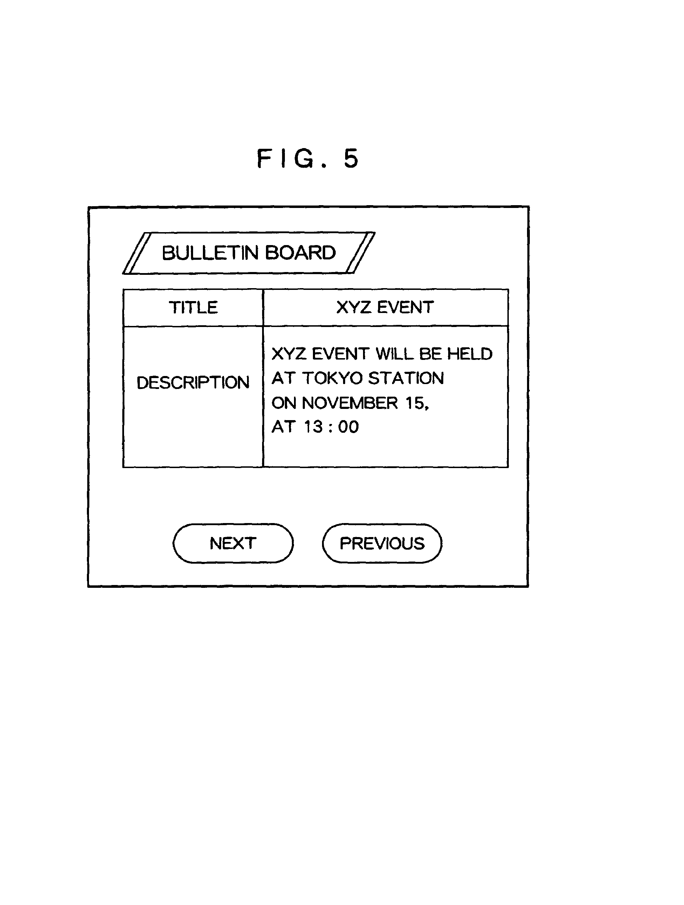

The bulletin board service is used by each intranet user to freely write information to inform other users. The bulletin board page as illustrated in Fig. 5, for example, is presented to each user. The XYZ event illustrated in Fig. 5 is posted on the board by registering the information distributed from the event announcement server 24 with the user terminal 18 supported by the business information server 28, as described hereinafter.

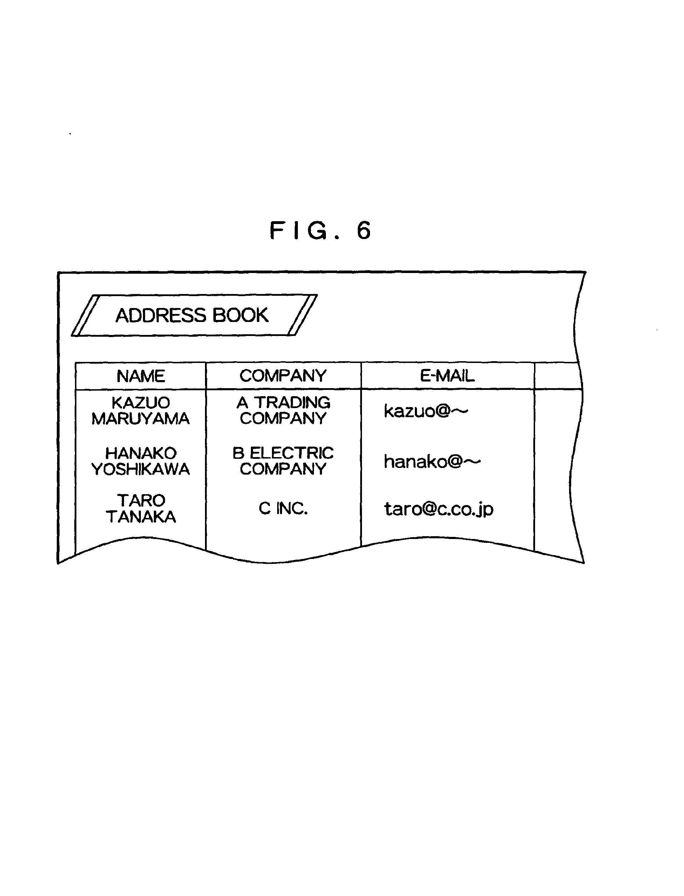

The address book management service is used for registering information of business acquaintances and others, such as their name, name of the company they belong to, Web site of the company, e-mail address, phone number, and fax number, so that users can refer to such information when necessary. An address list page as illustrated in Fig. 6, for example, is presented to each user. The information on Mr. Taro Tanaka is registered by the user terminal 18 supported by the business information server 28 using information distributed from the business card exchange server 22, as described later.

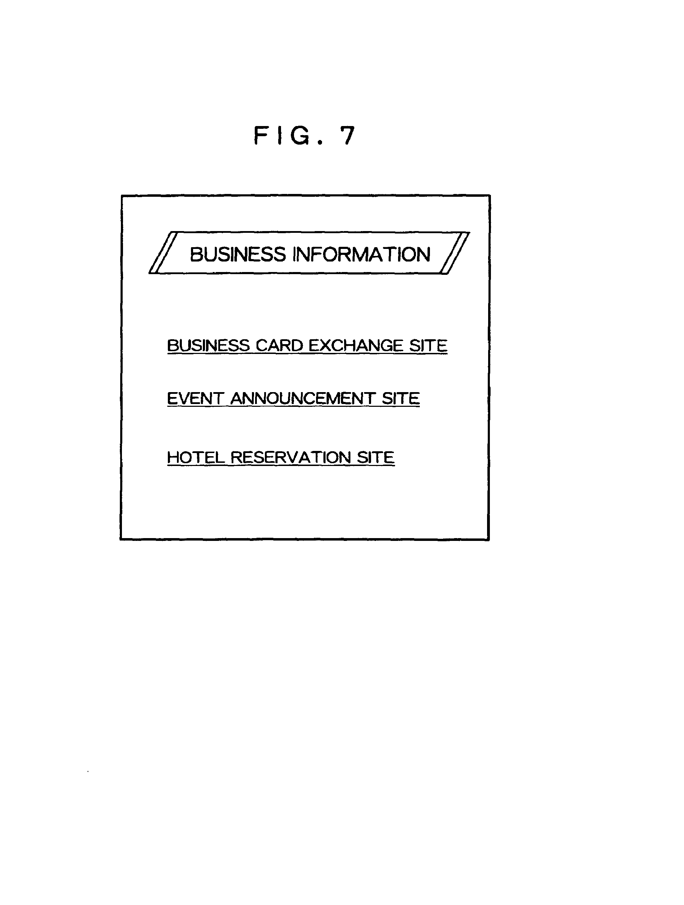

The business information provision service is a set of links used for accessing Web sites for hotel reservation, product purchase, and the like. When a button for "business information" on the top page illustrated in Fig. 2 is pressed, a business information page illustrated in Fig. 7 is shown. In this example, link buttons for the business card exchange server 22, the event announcement server 24, and the hotel reservation server 26 are provided as the business information (link information). Depression of such link buttons at the user terminal 18 causes a jump to the business card exchange server 22, the event announcement server 24, and the hotel reservation server 26, respectively.

The business information page illustrated in Fig. 7 is provided from the business information server 28. When a user accesses the business information server 28 from any user terminal 18 for the first time, an ID of the groupware server 14 (group ID) and a user ID are transmitted to the business information server 28.

More specifically, the link information corresponding to the "business information" button on the top page (see Fig. 2) is designed to include the group ID and the user ID, and such information is transmitted when an access is made to the business information server 28. The group ID is the information used for identifying the groupware server 14 and prestored in the groupware database 12.

The business information server 28 returns a Web page including an input form for the group name, user name, and URL of the groupware server 14 (and password if necessary) when an access is first made from the user terminal 18, acquires such information from the user, and stores a cookie indicating that the user is authenticated in the user terminal 18.

From the second time the user terminal 18 accesses the business information server 28, the cookie is transmitted from the user terminal 18 to simplify the user authentication. Even if the cookie is not transmitted due to accidental deletion or the like, the cookie can be obtained from the transmitted group ID and user ID and immediately retransmitted. Upon such retransmission, a password may be requested in order to enhance security.

Thus, any one user (such as the first user) of a group (of intranet users) must register the URL of the groupware server 14 at the business information server 28. After such registration, other users can receive support of the business information server 28 for information registration simply by entering the user name (and password if necessary) at the beginning of the process.

Next, the business card exchange server 22 will be described.

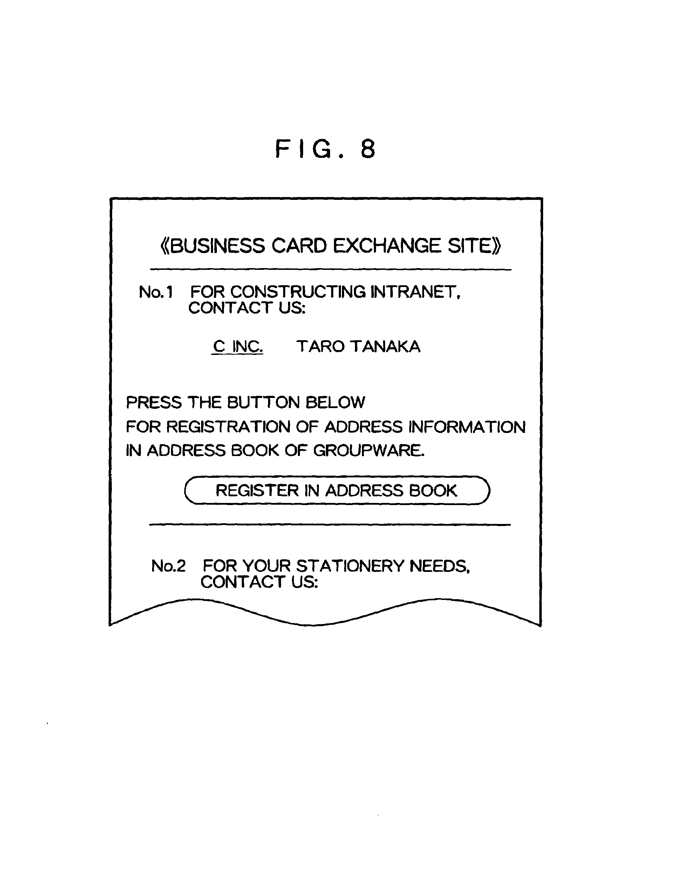

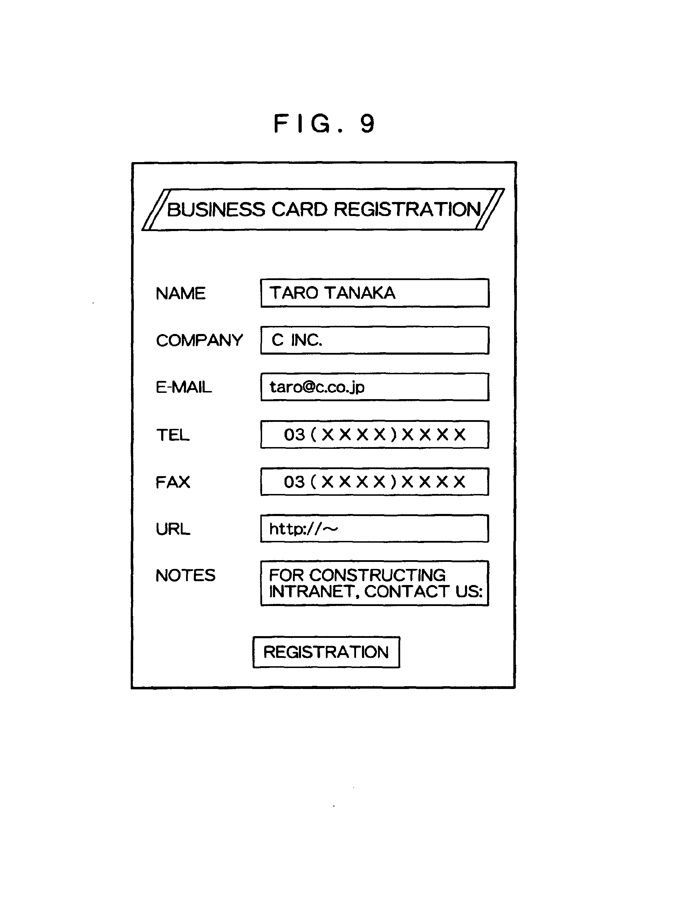

Fig. 8 illustrates an exemplary business card presentation page provided by the business card exchange server 22. The page illustrated in this figure shows, for each person, a message, a company name, a link button for the Web site of the company, and a person in charge. The business card exchange server 22 also provides a business card registration page illustrated in Fig. 9. The user fills in an input form on the registration page and presses a "registration" button provided at the bottom of the page to thereby register the input contents in the database connected to the business card exchange server 22. When accessed from the user terminal 18, the contents of the database is converted to the format of the bus iness card presentation page illustrated in Fig. 8 and transmitted to the user terminal 18. The business card presentation page includes a link button labeled with the phrase "Register in Address Book" for each presentation column. By pressing this link button, information on the person in that column is transmitted from the user terminal 18 to the business information server 28.

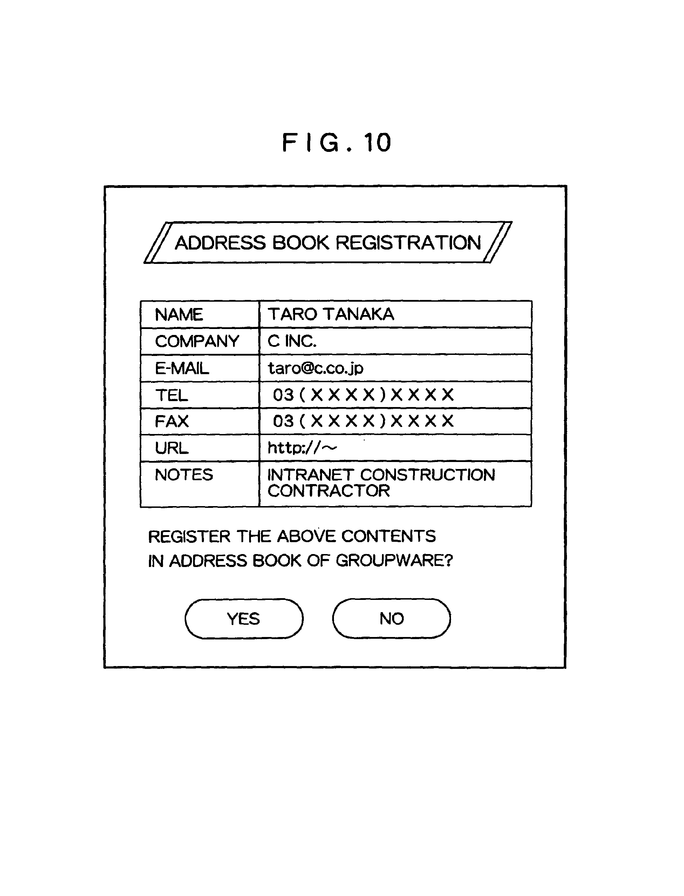

Fig. 10 illustrates an example of a page for confirming address book registration displayed at the user terminal 18 when the link button for "Register in Address Book" on the business card presentation page is pressed at the user terminal 18. By pressing the "Yes" button at the bottom of the page, the contents shown can be registered in the address book service of the groupware. Fig. 6 illustrates the address book page including the information on Mr. Taro Tanaka registered by pressing the "Register in Address Book" button illustrated in Fig. 8. When the "No" button is pressed, registration is cancelled and the page jumps to, for example, the business information page illustrated in Fig. 7.

The contents of this address book registration confirmation page, such as name, company name, e-mail address, phone number, fax number, URL, and notes, is the information contained in the link information corresponding to the "Register in Address Book" button on the business card exchange page, and transferred to the business information server 28 by pressing this link button at the user terminal 18. The link information also includes information designating the address book for registration, and the business information server 28 generates the address book registration confirmation page in accordance with such designation.

More specifically, the address book registration confirmation page is composed based on the hypertext transmitted from the business information server 28 to the user terminal 18, and this hypertext is generated by a CGI program installed in the business information server 28 based on the contents stored in the information registration assisting database 30 and the link information corresponding to the "Register in Address Book" button provided in the business card exchange page. The installation of the CGI program in the business information server 28 is also achieved through an information storage medium such as a CD-ROM or a DVD-ROM, or through the communication network such as the Internet 20. The link information provided from the business card presentation page includes the registration contents such as name and company name and the information designating the address book to register such contents (hereinafter referred to as "information type").

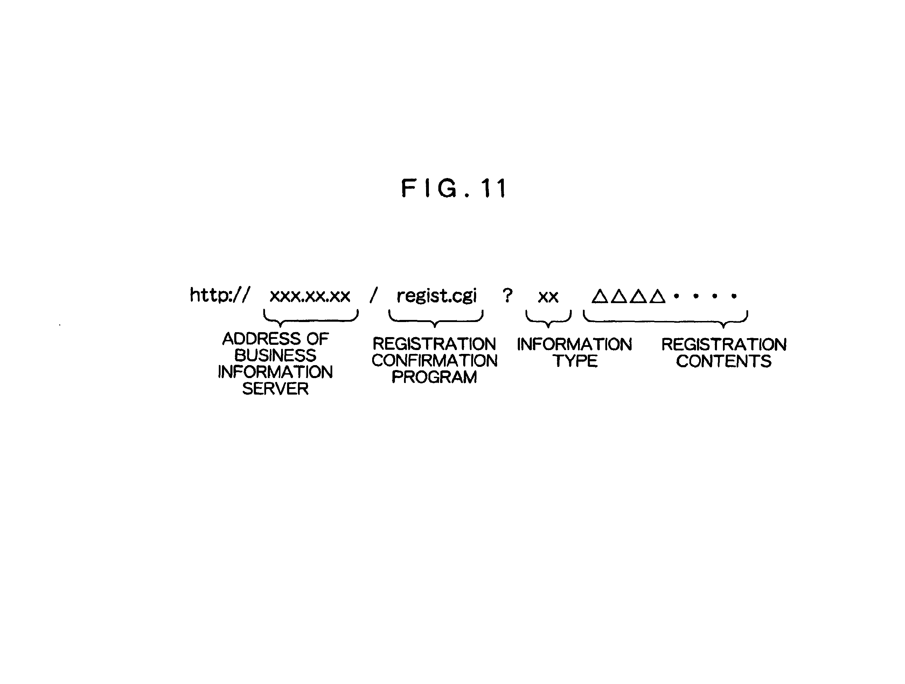

Fig. 11 illustrates the link information corresponding to the "Register in Address Book" button provided on the business card exchange page distributed from the business card exchange server 22. As illustrated, the link information includes the information type and the registration contents as arguments, and the CGI program for registration confirmation installed in the business information server 28 is designated as a receiver of such information in the link information.

Receiving the URL illustrated in Fig. 11 from the user terminal 18, the CGI program for confirming registration (regist.cgi) reads out a cookie transmitted with the URL. This cookie is stored in the user terminal 18 as user authentication information when an access is made for the first time, and includes a cookie ID as its contents.

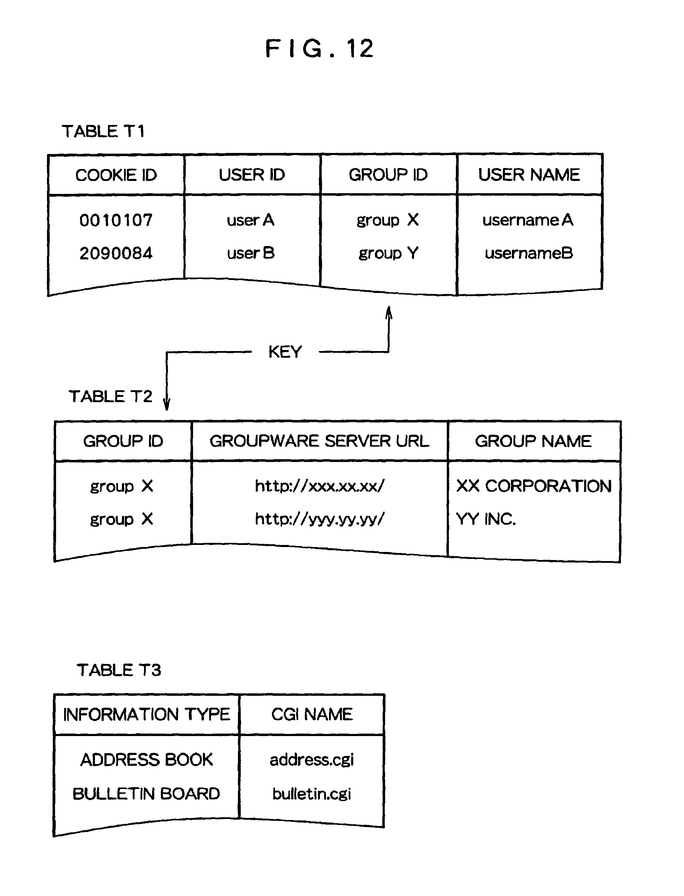

On the other hand, three tables T1-T3 are stored in the information registration assisting database 30 as illustrated in Fig. 12. In the table T1, the cookie ID (user identifying information), the user ID (user identifying information) of the user corresponding to this cookie ID, the group ID of the group the user belongs to, and the user name of this user are stored in association with one another. In the table T2, the group ID, the groupware server URL (access information) of the group corresponding to this group ID, and the name of the group are stored in association with one another. In the Table 3, the information type and the CGI name (access information) used for registering information in this information type are stored in association with each other. The information registration assisting database 30 allows readout of the groupware server URL in the table T2 corresponding to the cookie ID in the table T1 using the group ID as a search key.

According to the CGI program for registration confirmation in the business information server 28, when the cookie ID is acquired from the cookie transmitted from the user terminal 18, the group ID corresponding to that cookie ID is read out from the table T1, and the groupware server URL corresponding to that group ID is read from the table T2. Further, when the information type (the service to register information) is acquired from the argument of the URL received from the user terminal 18, the CGI name corresponding to the acquired information type is read out from the table T3. The CGI name read out from the table T3 is concatenated after the groupware server URL read out from the table T2 to generate the URL used for accessing the CGI program for information registration.

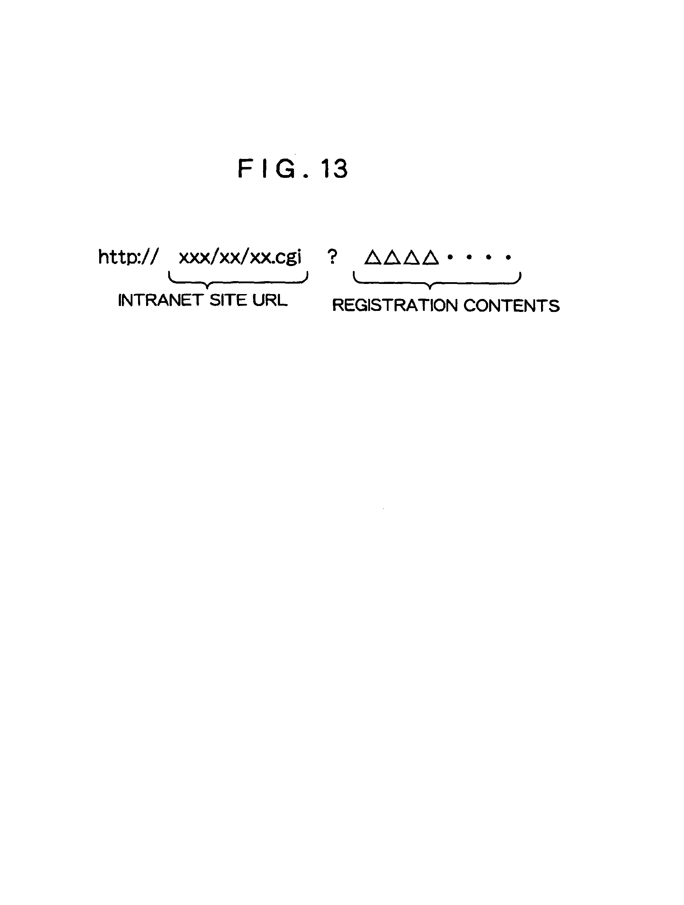

Further, the business information server 28 is designed to prestore a default base page in association with each information type, so that, when the business information server 28 receives a URL from the user terminal 18, the base page corresponding to the information type designated by the URL is acquired therefrom. The base page is the page where a basic layout (design) of the registration confirmation page is depicted. In addition to such a default base page, a variety of base pages having a base page ID assigned thereto may be prearranged in the business information server 28, and the URL transmitted from the user terminal 18 to the business information server 28 may include an ID designating a base page, so that the business information server 28 can determine the layout of the registration confirmation page using the base page designated by the received URL. The layout of the registration confirmation page can thus be determined using the base page. After the base page is acquired as described above, the business information server 28 embeds in each column of the base page the registration contents included in the URL argument, and the URL for accessing the information registration CGI program as link information corresponding to a link button labeled with the word "Yes" displayed at the bottom of this page. As an argument of the CGI program, the server also embeds therein the registration contents included in the argument of the URL received from the user terminal 18. At this stage, the registration contents may be added, deleted, modified or sorted, as necessary. Fig. 13 shows one specific example of link information embedded in the base page associated with the "Yes" button by the registration confirmation CGI program as described above. The base page modified as described above is returned to the user terminal 18 as a schedule registration confirmation page. Thus, by pressing the "Yes" button at the bottom, the URL illustrated in Fig. 13 is transmitted from the user terminal 18 to the groupware server 14, which also receives a cookie (user authentication information). Based on such information, the groupware server 14 causes the groupware database 12 to store the received registration contents. Thus, it is made possible to simply register information distributed from the business card exchange server 22 at the schedule service of the groupware.

While personal information is registered in the address book by a user depressing the "Yes" button on the address book registration confirmation page in the above example, such a link button may not be provided and information may be automatically registered after a predetermined time (i.e. automatic jump to the information registration CGI program of the groupware server 14 may be made).

Next, the event announcement server 24 will be described.

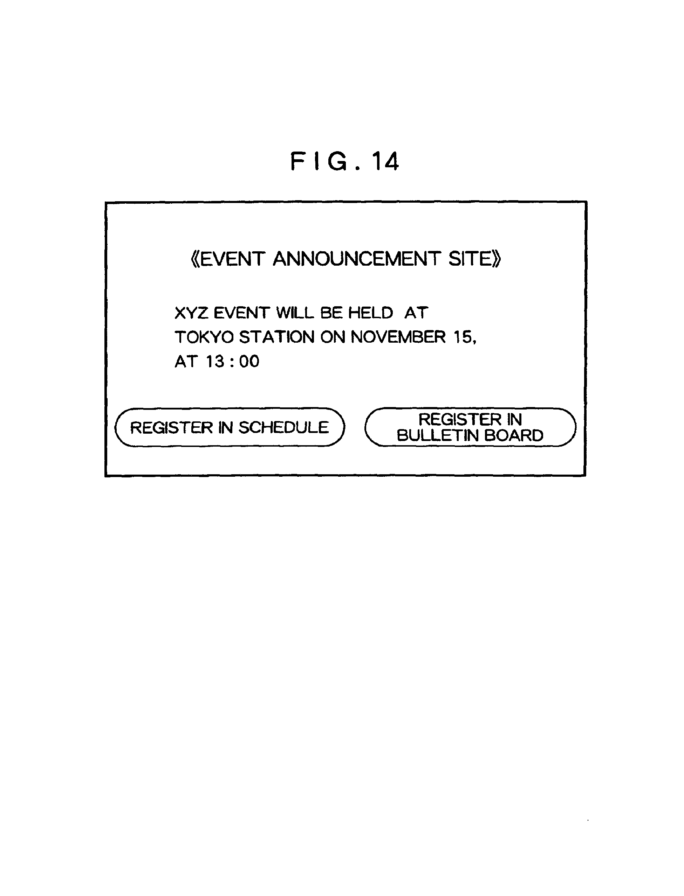

Fig. 14 illustrates an exemplary event announcement page distributed from the event announcement server 24. As illustrated in the figure, description of an event is shown on the event announcement page, and the buttons for "Register in Schedule" and "Register in Bulletin Board" are provided thereunder, which are link buttons for causing transmission of such event description and designation of the service to register such information (the schedule management service or the bulletin board service) from the user terminal 18 to the business information server 28 in response to user's depression of the button. Thus, the business information server 28 facilitates user's registration of information distributed from the event announcement server 24 to the groupware, similarly to the business card exchange server 22.

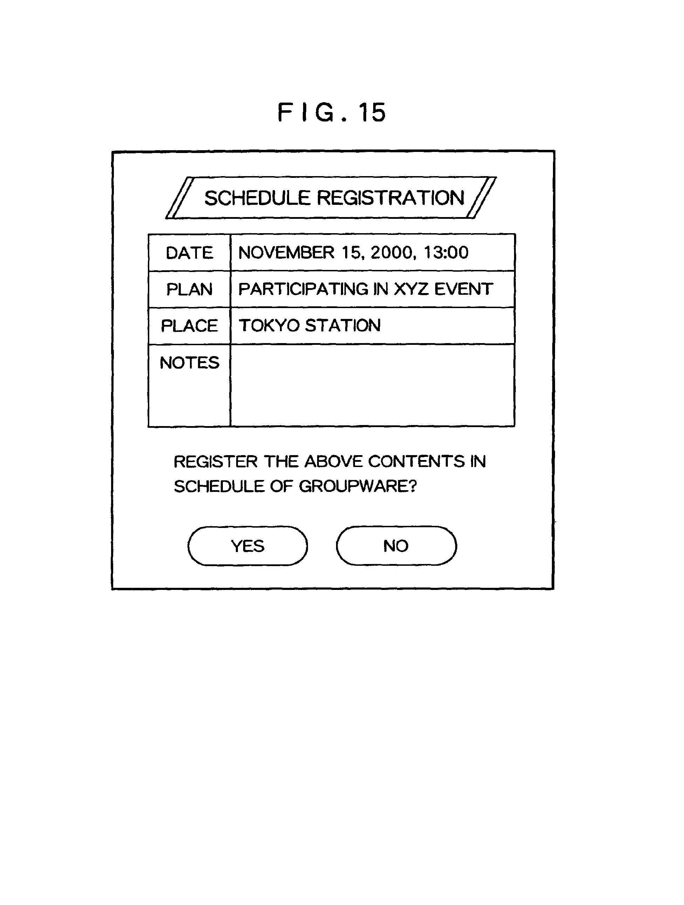

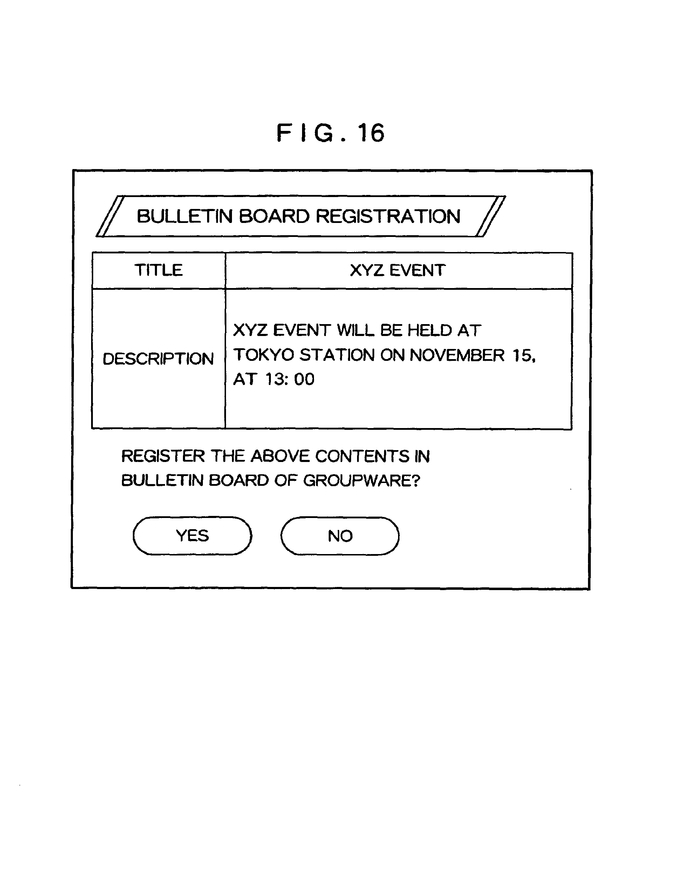

Fig. 15 illustrates an exemplary page for confirming schedule registration transmitted from the business information server 28 to the user terminal 18 when the user presses the "Register in Schedule" button on the event announcement page illustrated in Fig. 14. When the user presses the "Yes" button on this page, the user's "participation in XYZ event" is registered in the schedule service of the groupware as his/her schedule. Fig. 16 illustrates an exemplary page for confirming registration in the bulletin board transmitted from the business information server 28 to the user terminal 18 when the "Register in Bulletin Board" button on the event announcement page illustrated in Fig. 14 is pressed. When the "Yes" button on this page is pressed, information on the "XYZ event" is posted on the bulletin board service of the groupware.

Next, the hotel reservation server 26 will be described.

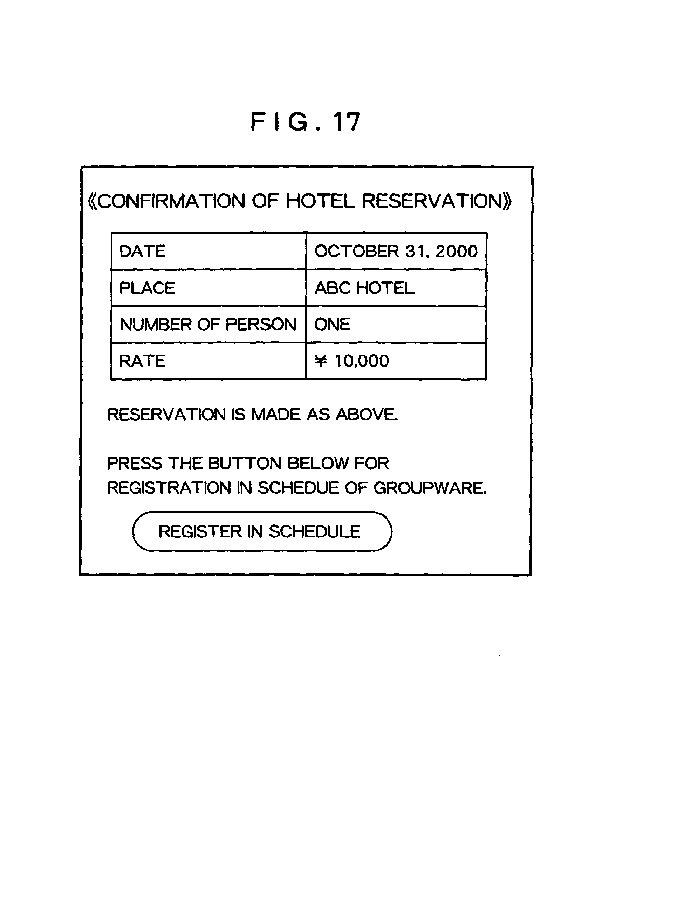

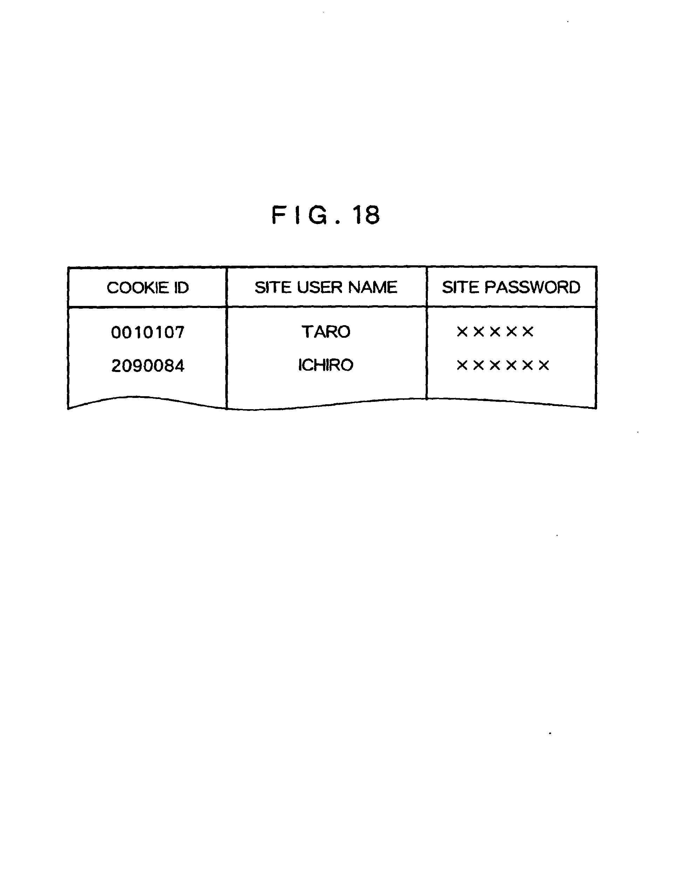

Fig. 17 illustrates an exemplary hotel reservation confirmation page distributed from the hotel reservation server 26. This page is eventually transmitted from the hotel reservation server 26 to the user terminal 18 after the user goes through the pages of user authentication, data entry for reservation, and the like. If a jump is made from the business information page illustrated in Fig. 7 to the hotel reservation server 26, an authentication information table illustrated in Fig. 18 may be arranged and stored in the information registration assisting database 30 to eliminate user authentication at the hotel reservation server 26.

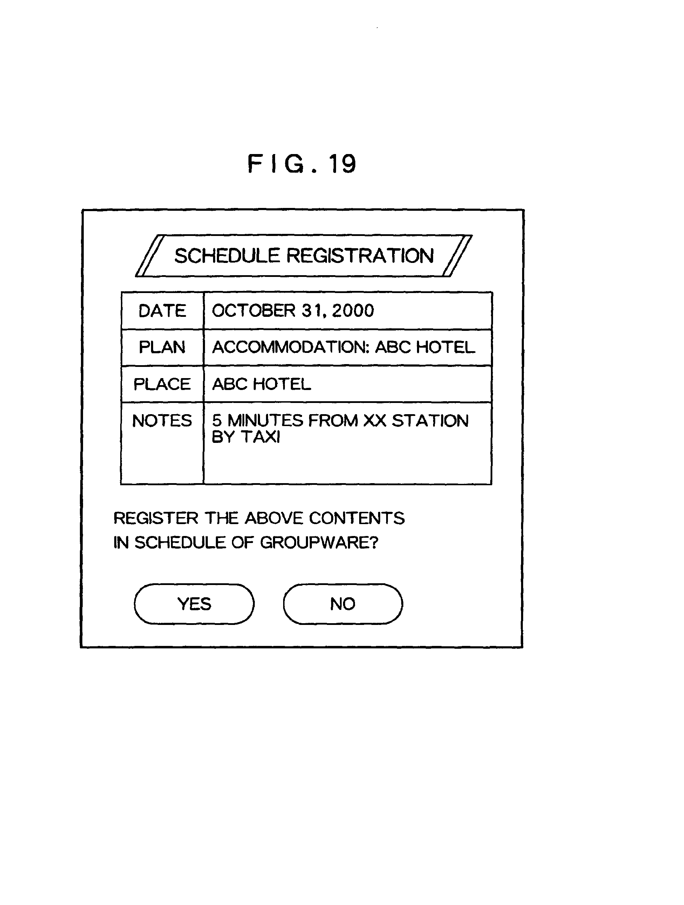

The "Register in Schedule" button is also provided at the bottom of the hotel reservation confirmation page illustrated in Fig. 17. By pressing this button, the contents of reservation and service to register the contents (schedule service) are transmitted from the user terminal 18 to the business information server 28. The business information server 28 returns a schedule registration confirmation page including link information used for transmitting such information to the groupware server 14 as illustrated in Fig. 19. In response to depression of the "Yes" button on this page, the contents of the hotel reservation can be registered easily in the schedule service of the groupware from the user terminal 18 based on the link information corresponding to this button. The schedule page illustrated in Fig. 3 indicates that registration of "Accommodation: ABC hotel" is obviously made as the user's schedule on "October 31, 2000", when the user stays, as a result of a user depressing the "Yes" button on the schedule registration confirmation page illustrated in Fig. 19.

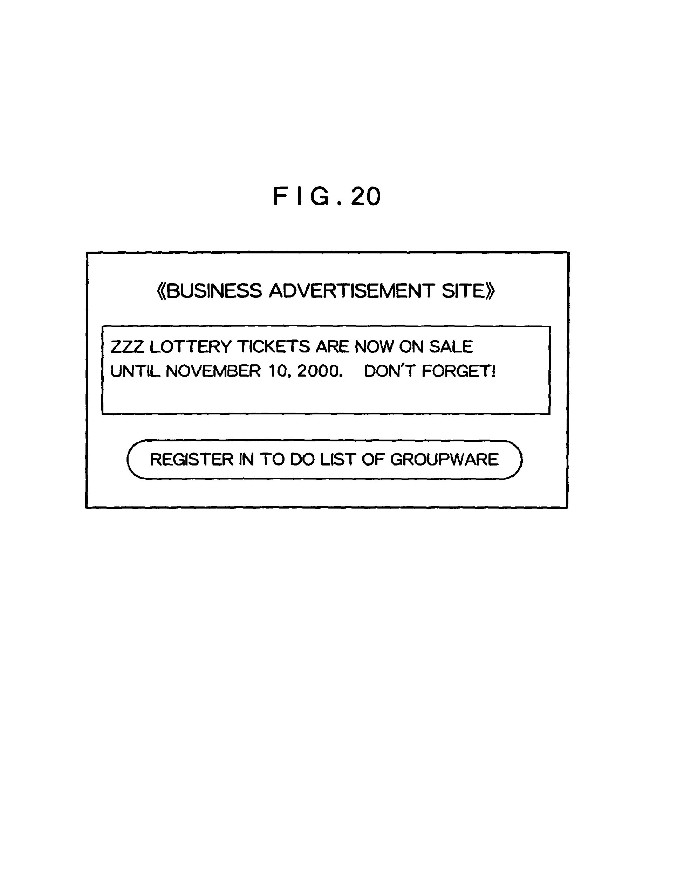

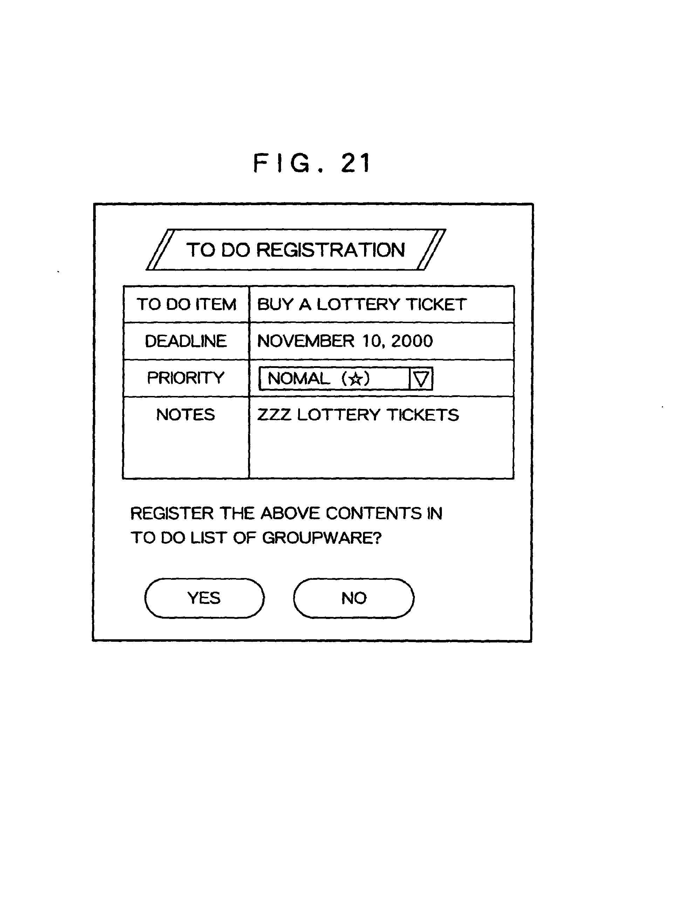

The business advertisement server 25 will next be described. Fig. 20 illustrates an exemplary business advertisement page distributed from the business advertisement server 25. On the business advertisement page illustrated in this figure, an advertisement announcing that lottery tickets are now on sale until November 10, 2000, and a button "Register in To Do List in Groupware" is provided under the advertisement. User's depression of this button causes a To Do registration confirmation page illustrated in Fig. 21 to be displayed on the user terminal 18. By simply pressing the "Yes" button provided at the bottom of this page, a note that the user must buy a lottery ticket by November 10, 2000 can be easily registered in the To Do list of the groupware.

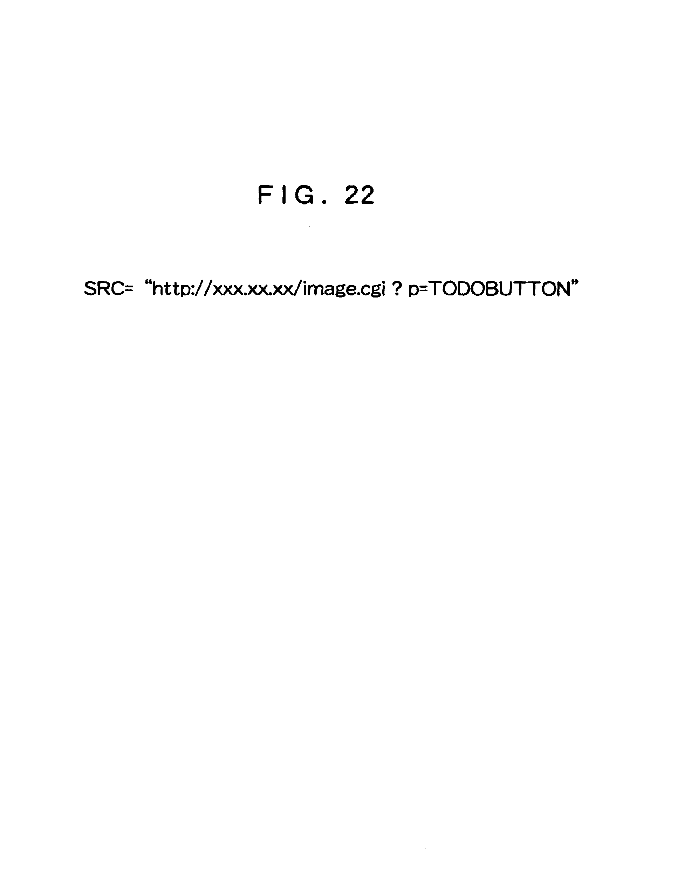

It should be noted that the business advertisement server 25 distributes such business advertisements not only to the users of the groupware server 14 but to users in general. Therefore, if the button "Register in To Do List in Groupware" is always displayed as illustrated in Fig. 20 regardless of the type of users, such a useless link button may confuse users, as well as ruining the appearance of the business advertisement page. Consequently, a source as illustrated in Fig. 22 is used for displaying the button "Register in To Do List in Groupware" on the business advertisement page of Fig. 20. This indicates that an execution result of "image.cgi", a CGI program for generation of an image installed in the business information server 28 should be displayed as a link button on the business advertisement page. The program "image.cgi" is designed to receive information for designating an image of the button "Register in To Do List in Groupware" as an argument, and return the designated image based on this source when the program "image.cgi" in the business information server 28 is accessed from the user terminal 18. At this time, the program "image.cgi" is designed to read out the cookie transmitted from the requester of the image, and return a dummy image sized "0 X 0" if the cookie is not the one provided to the user of the groupware server 14, or if a cookie is not transmitted. It is thus made possible not to display the button "Register in To Do List in Groupware" when the business advertisement page is distributed to those who are not the users of the groupware server 14.

According to the information registration assisting system 10 described above, simply adding a link button and simple link information to the business card exchange server 22, event announcement server 24, business advertisement server 25, hotel reservation server 26, or the like, facilitates user's registration of the desired contents in the groupware without causing security problems. Further, intranet users can also access a site on the Internet 20 to easily register useful information in the groupware.

The present invention is not limited to the above-described embodiments.

By way of example, while information distributed from Internet sites is registered in the groupware server 14 in the above description, the present invention can be equally applicable to cases where information distributed from Internet sites is registered in other Internet sites, information distributed from Intranet sites is registered in Internet sites, and information distributed from Intranet sites is registered in other sites on the same Intranet.

Further, when information from the business card exchange server 22, event announcement server 24, business advertisement server 25, hotel reservation server 26, or the like is transmitted from the user terminal 18 to the business information server 28, the site providing the link may be recorded in the business information server 28, so that the operator of the business information server 28 may use the record as basic information to charge the business card exchange server 22, event announcement server 24, business advertisement server 25, hotel reservation server 26, or the like.

As described above, according to the present invention, user identifying information and access information are stored in association with each other, and registration request link information for requesting information registration in an information registration device is generated based on the registration content and access information corresponding to the user identifying information received from a user device, and is transmitted to the user device, so that the user device can easily request the information registration device to register information based on the information request link information.

## Claims

1. An information registration assisting system comprising an information distributing device, and an information registration assisting device, said information registration assisting device assisting a user device to register information distributed from said information distributing device in an information registration device, wherein
said information distributing device includes distributed information transfer link information transmitting means for transmitting to said user device distributed information transfer link information used for transmitting said distributed information from said user device to said information registration device,
said information registration assisting device includes:
user identifying information receiving means for receiving user identifying information from said user device,
information storage means for storing access information for registering information in said information registration device and said user identifying information in association with each other,
access information reading means for reading said access information stored in said information storage means in association with said user information received by said user identifying information receiving means,
registration content acquiring means for receiving said distributed information and using said information as content to register in said information registration device,
registration request link information generating means for generating registration request link information used by said user device for requesting registration of said registration content in said information registration device based on said access information read by said access information reading means and said registration content acquired by said registration content acquiring means, and
registration request link information transmitting means for transmitting to said user device registration request link information generated by said registration request link information generating means, whereby
said user device can request said information registration device to register said registration content based on said registration request link information.

2. An information registration assisting device for assisting a user device to register information in an information registration device, comprising:
user identifying information receiving means for receiving user identifying information from said user device;
information storage means for storing access information for registering information in said information registration device and said user identifying information in association with each other;
access information reading means for reading said access information stored in said information storage means in association with said user information received by said user identifying information receiving means;
registration content acquiring means for acquiring a registration content;
registration request link information generating means for generating registration request link information used by said user device for requesting registration of said registration content in said information registration device based on said access information read by said access information reading means and said registration content acquired by said registration content acquiring means; and
registration request link information transmitting means for transmitting to said user device registration request link information generated by said registration request link information generating means, wherein
said user device can request said information registration device to register said registration content based on said registration request link information.

3. An information registration assisting device according to claim 2, wherein
said access information includes information for identifying an address of said information registration device.

4. An information registration assisting device according to claim 2 or 3, wherein
said registration content acquiring means acquires information received from said user device as said registration content, and the received information is based on information distributed from a predetermined information distributing device to said user device.

5. An information distributing device for causing an information registration device to register distributed information by using an information registration assisting device for assisting a user device to register information in the information registration device, comprising
distributed information transfer link information transmitting means for transmitting to said user device distributed information transfer link information used for transmitting said distributed information to said information registration device from said user device.

6. Amethod for assisting a user device to register information in an information registration device, comprising:
a user identifying information receiving step for receiving user identifying information from said user device;
an access information reading step for reading access information for registering information in said information registration device stored in association with said user information received at said user identifying information receiving step from information storage means for storing said access information and said user identifying information in association with each other;
a registration content acquiring step for acquiring a registration content;
a registration request link information generating step for generating, based on said access information read at said access information reading step and said registration content acquired at said registration content acquiring step, registration request link information used by said user device to request said information registration device to register said registration content; and
a registration request link information transmitting step for transmitting to said user device registration request link information generated at said registration request link information generating step.

7. A method for causing an information registration device to register distributed information by using an information registration assisting device for assisting a user device to register information in said information registration device, comprising
a distributed information transfer link information transmitting step for transmitting to said user device distributed information transfer link information for transmitting said distributed information from said user device to said information registration device.

8. An information storage medium storing a program for assisting a user device to register information in an information registration device, said program causing a computer to execute:
a user identifying information receiving step for receiving user identifying information from said user device;
an access information reading step for reading access information for registering information in said information registration device stored in association with said user information received at said user identifying information receiving step from information storage means for storing said access information and said user identifying information in association with each other;
a registration content acquiring step for acquiring a registration content;
a registration request link information generating step for generating, based on said access information read at said access information reading step and said registration content acquired at said registration content acquiring step, registration request link information used by said user device to request said information registration device to register said registration content; and
a registration request link information transmitting step for transmitting to said user device registration request link information generated at said the registration request link information generating step.
